# EUROPÄISCHE PATENTSCHRIFT

(11) **EP 2 063 146 B1**
(45) Veröffentlichungstag und Bekanntmachung des Hinweises auf die Patenterteilung: **26.05.2010**
(21) Anmeldenummer: 07022802.8
(22) Anmeldetag: 24.11.2007
(51) Int. Cl.: F16D 25/0638, F16D 25/10, F16D 13/64

(54) **Lamellenkupplungseinrichtung**
Multi-disc clutch device
Dispositif d'embrayage à disques multiples

(43) Veröffentlichungstag der Anmeldung: 27.05.2009
(73) Patentinhaber: ZF Friedrichshafen AG, 88038 Friedrichshafen (DE)
(72) Erfinder: Grosspietsch, Wolfgang, 97422 Schweinfurt (DE)

(56) Entgegenhaltungen:
- DE-A1- 10 124 213
- US-A1- 2004 035 666

## Beschreibung

Es sind bereits Lamellenkupplungseinrichtungen für die Anordnung in einem Antriebsstrang eines Kraftfahrzeuges bekannt (z. B. DE 101 11 203 A1). Hierbei sind Außenlamellen, welche einem Außenlamellenträger zugeordnet sind, und Innenlamellen, welche einem Innenlamellenträger zugeordnet sind, alternierend angeordnet und bilden ein Lamellenpaket. Zur Anordnung der Lamellen sind bereits verschiedene Strategien bekannt. So ist z. B. vorgesehen, dass die Belag tragenden Lamellen primärseitig angeordnet werden können, also auf der der Antriebseinheit zugeordneten Seite der Kupplung, um unmittelbar von der Antriebseinheit angetrieben zu werden. Ziel dieser Anordnung soll sein, dass durch die angeordneten Nuten auf den Belaglamellen eine Pumpwirkung zum Pumpen des Kühlöls nach radial außen erfolgen soll, um eine Kühlung des Lamellenpaktes sicherzustellen.

Andere Überlegungen zum Anordnen der Lamellen im Lamellenpaket zielen in Richtung des unterschiedlichen Massenträgheitsmomentes der beiden Lamellenarten. Insbesondere wird daran gedacht, die Lamellen, welche ein größeres Massenträgheitsmoment aufweisen, primärseitig anzuordnen und die Lamellen, welche das geringere Massenträgheitsmoment aufweisen, getriebeseitig, also sekundärseitig, anzuordnen. Hierdurch wird erreicht, dass die Lamellen mit der geringeren Massenträgheit an der jeweiligen Getriebeeingangswelle angekoppelt sind, und damit beim Synchronisieren der Getriebeeingangswelle des Getriebes vorteilhaft eine geringere Synchronisierarbeit verrichtet werden muss.

Eine weitere Überlegung zur Anordnung der Lamellentypen im Lamellenpaket zielt speziell auf Doppelkupplungseinrichtungen, welche radial angeordnet sind. Hierbei ist vor allem daran gedacht, sowohl die Innenlamellen der einen Kupplung, als auch die Innenlamellen der anderen Kupplung, beide als Stahllamellen oder als Belaglamellen auszubilden. Entsprechendes gilt für die Außenlamellen der beiden Kupplungsanordnungen der Doppelkupplungseinrichtung. Hintergrund dieser Überlegung ist, dass beide Innenlamellentypen bzw. Außenlamellentypen bei der Herstellung aus einem gemeinsamen Materialstück herstellbar sind. Hierdurch können die Produktionskosten gesenkt werden.

Es hat sich jedoch gezeigt, dass bei neuartigen Lamellenpaketen von Nasslaufkupplungseinrichtungen, welche eine feinfühlige Regelungs- und Steuerungscharakteristik aufweisen, sich Momentenungleichförmigkeiten speziell im Übertragungsbereich nahe des Touchpoints ergeben, welche sich unvorteilhaft auf die Regelbarkeit der Kupplung auswirken.

Aufgabe der Erfindung ist es daher, die Momentenungleichförmigkeiten zumindest reduzieren zu können. Zur Lösung dieser Aufgabe wird ein Verfahren nach Anspruch 1 vorgeschlagen. Eine Ursache der bereits angesprochenen Drehmomentenungleichförmigkeit der Lamellenpakete kann darin liegen, dass die Lamellen Unebenheiten und/oder Unparallelitäten aufweisen. Hierbei kann z. B. die axiale Dicke der Lamellen über dem Umfang schwanken oder aber die Lamellenebene ist nicht plan, sondern weist einzelne Erhebungen auf. Zusammen mit einem Anpresselement, welches nicht gleichmäßig am Umfang des Lamellenpaketes anliegt und dieses somit ungleichmäßig stark zusammendrückt, entstehen die unvorteilhaften Momentenungleichförmigkeiten in der Drehmomentübertragungscharakteristik. In einem Betriebszustand, in welchem die primärseitig angeordneten Lamellen, also die motorseitig und mit Motordrehzahl rotierenden Lamellen sich drehen, wohingegen die sekundärseitigen Lamellen eine Differenzdrehzahl aufweisen, bzw. noch stehen, wie es z. B. bei einem Anfahrvorgang auftritt, schleifen die axialen Erhebungen bzw. Unebenheiten der Lamellen mit einem stärkeren Druck an ihren jeweiligen Gegenlamellen. Weist nun eine der Lamellenarten, also entweder Belag tragende Lamellen oder die belaglosen Lamellen, solche Unebenheiten bzw. axialen Toleranzen auf, und liegt gleichzeitig das Anpresselement an einer Stelle oder in einem Bereich stärker am Lamellenpaket an, wurde nach der Erfindung erkannt, dass es darauf ankommt, ob die Lamellen mit den größeren Unebenheiten und das Anpresselement gleichseitig oder verschiedenseitig angeordnet sind. In diesem Zusammenhang spricht man von einer gleichseitigen Anordnung, wenn sowohl das Anpresselement, als auch die Lamellen mit der größeren Unebenheit entweder beide primärseitig oder beide sekundärseitig angeordnet sind. Unter einer verschiedenseitigen Anordnung in diesem Zusammenhang ist zu verstehen, wenn das Anpresselement primärseitig und die Lamellen mit der größeren Unebenheit sekundärseitig angeordnet sind, oder aber wenn das Anpresselement sekundärseitig und die Lamellen mit der größeren Unebenheit primärseitig angeordnet sind.

Sind nun das Anpresselement und die Lamellen im Lamellenpaket, welche die größere Unebenheit aufweisen, verschiedenseitig angeordnet und liegt zudem das Anpresselement nicht gleichförmig am Umfang an sondern weist in einem Bereich oder an einer Stelle eine größere Anpresskraft oder einen größeren Anpressdruck aufgrund einer Verkippung zum Lamellenpaket auf, wird das Lamellenpaket in diesen Bereich stärker zusammengedrückt. Liegt nun eine Drehzahldifferenz zwischen der Primärseite und der Sekundärseite, also zwischen den Innenlamellen und den Außenlamellen vor, passieren die Unebenheiten bzw. dicken Erhebungen der Lamellen einmal am Umfang die Stelle, an welcher das Anpresselement das Lamellenpaket stärker zusammendrückt. Hierdurch wird punktuell, bzw. bereichsweise ein größeres Moment übertragen, da sich in diesem Bereich der Anpressdruck erhöht und dadurch mehr Drehmoment übertragen wird. Hierdurch entstehen die Momentungleichförmigkeiten in der Kupplungscharakteristik bei vorliegender Drehzahldifferenz. Je nach Anpresskraft können infolge der im Lamellenpaket vorliegenden Elastizitäten unterschiedlich hohe Momentenungleichförmigkeiten pro Umdrehung auftreten.

Diese Momentenungleichförmigkeit wird nun erfindungsgemäß dadurch reduziert, dass sowohl das Anpresselement als auch die Lamellen, welche die größeren Unebenheiten bzw. Dickenschwankungen aufweisen, gleichseitig angeordnet sind. Unerheblich ist es, ob hierbei das Anpresselement und die besagten Lamellen beide primärseitig oder beide sekundärseitig angeordnet sind. Das Anpresselement und die Lamellen mit den größeren Unebenheiten rotieren durch die erfindungsgemäße Anordnung immer mit gleicher Drehzahl, unabhängig davon, ob eine Differenz zwischen Primärseite und Sekundärseite vorliegt. Selbst wenn das Anpresselement durch eine Verkippung ungleichmäßig am Umfang des Lamellenpakets anliegt und somit an einer Stelle eine größere Anpresskraft aufweist, tragen die Unebenheiten der auf derselben Seite wie das Anpresselement angeordneten Lamellen nicht mehr zu den Momentenungleichförmigkeiten der Lamellenkupplung bei. Sind im Idealfall die auf der Gegenseite angeordneten Lamellen, unabhängig davon, ob es sich hierbei um die Belag aufweisenden oder die belaglosen Lamellen handelt, ideal eben und ohne axiale Dickenschwankungen ausgebildet, sind die Momentenungleichförmigkeiten der Lamellenkupplung vollständig aufgehoben, auch wenn die gleichseitig dem Anpresselement angeordneten Lamellen axiale Toleranzen aufweisen.

Nach einer bevorzugten Ausgestaltung der Erfindung ist vorgesehen, dass die belaglosen Lamellen als Stahllamellen ausgebildet sind und die Belag aufweisenden Lamellen mit Belagtragelementen und auf einer Seite oder - vorzugsweise - auf beiden Seiten daran angebrachten Belägen ausgeführt sind. Die Belagtragelemente sind bevorzugt aus Stahl ausgeführt, die Beläge bevorzugt als sogenannte Papierbeläge ausgeführt.

Eine Variante der erfindungsgemäßen Verfahren sieht hierbei vor, dass die Stahllamellen als Außenlamellen ausgeführt sind und gegenüber den Belag aufweisenden Lamellen, kurz Belaglamellen, die größeren axialen Toleranzen aufweisen und primärseitig angeordnet sind. Zur Erzielung des erfindungsgemäßen Vorteiles ist hierbei vorgesehen, dass das Anpresselement ebenfalls primärseitig angeordnet ist. Ein weiterer Vorteil der Anordnung der Stahllamellen und des Anpresselementes primärseitig ist, dass die Belaglamellen, welche üblicherweise das geringere Massenträgheitsmoment aufweisen, sekundärseitig angeordnet sind, wodurch die Lamellen mit dem geringeren Massenträgheitsmoment sekundärseitig angeordnet sind und somit eine geringere Synchronarbeit beim Synchronisieren der Getriebeeingangswelle nötig ist. Ein weiterer Vorteil dieser Anordnung ist, dass die Belaglamellen somit als Innenlamellen ausgeführt sind und einem Innenlamellenträger zugeordnet sind, wodurch sich ein weiterer Vorteil bezüglich des Massenträgheitsmoments im Vergleich zu einer Ausgestaltung der Belaglamellen als Außenlamellen ergibt.

Weisen hingegen die Belaglamellen gegenüber den Stahllamellen die größeren axialen Toleranzen auf, ist eine Anordnung dergestalt vorgesehen, dass die Belaglamellen als Außenlamellen ausgeführt und primärseitig angeordnet sind. Vorteilhaft hierbei wiederum ist, dass die sekundärseitigen Lamellen des Lamellenpaketes als Innenlamellen, welche einem Innenlamellenträger zugeordnet sind, ausgeführt sind, und somit ein Vorteil im Massenträgheitsmoment erzielt werden kann, auch wenn nunmehr die Stahllamellen, welche normalerweise das größere Massenträgheitsmoment aufweisen, sekundärseitig angeordnet sind. Das Anpresselement ist erfindungsgemäß gleichseitig den Belaglamellen, also primärseitig, angeordnet. Ein zusätzlicher Vorteil dieser Anordnung ist dadurch gegeben, wenn die Belaglamellen auf ihren Belagtragelementen radiale Nutungen aufweisen, welche durch die primärseitige Anordnung eine Pumpwirkung auf das Kühlöl auch bei stehender Sekundärseite ausüben.

Einen besonders großen Vorteil weist die Erfindung auf, wenn das Anpresselement als hydraulisch betätigter Kolben ausgebildet ist, welcher in einem radial inneren Bereich einen, einem Kolbenraum zugeordneten, Bereich aufweist und in einem radial äußeren Bereich auf das Lamellenpaket wirkt.

Wie bereits erwähnt, können die unvorteilhaften Momentenungleichförmigkeiten aufgrund einer ungleichmäßigen Anlage des Anpresselements am Lamellenpaket auftreten. Ist nunmehr das Anpresselement als hydraulisch betätigter Kolben ausgebildet, so wird der Kolben üblicherweise mittels Dichtelementen in einem ihm zugeordnetem, zumeist axial festgelegtem Zylinder verschiebbar ausgebildet. Eine axiale Führung des Kolbens erfolgt hierbei über die Dichtelemente. Üblicherweise weisen solche Dichtelemente zum Abdichten hydraulisch betätigter Kolben eine gewisse Elastizität auf, um dichtend zu wirken. Durch diese Elastizität hat der Kolben gegenüber seinem Zylinder eine gewisse Freiheit bezüglich eines Verkippens. Liegt zudem der Anpressbereich, an welchem der Kolben am Lamellenpaket anliegt, nicht zwischen den beiden Dichtelementen, welche den Kolbenraum definieren, sondern radial außerhalb, wirkt sich eine Verkippung des Kolbens am Lamellenpaket umso stärker aus. Durch dieses Verkippen kommt es, wie bereits angesprochen, zu einer partiell örtlichen Steigerung der Drehmomentübertragungsfähigkeit der Lamellenkupplung.

Wie bereits angesprochen, kann bei Vorliegen von idealen Lamellen des einen Typs und Toleranz aufweisenden Lamellen des anderen Typs eine erfindungsgemäße Ausgestaltung des Verfahrens Momentenungleichförmigkeiten komplett eliminieren. Üblicherweise sind jedoch beide Arten der Lamellen, also sowohl die Belag aufweisenden wie auch die belaglosen Lamellen mit Axialtoleranzen bzw. Unebenheiten behaftet. Kostenaufwendige Nachbearbeitungen der Lamellen, wie Planschleifen oder ähnliches, können die Ebenheit zwar erhöhen und damit die Momentenungleichförmigkeiten reduzieren, jedoch sind solche Nacharbeiten kostenaufwändig. Weisen beide Lamellentypen, somit Axialtoleranzen und Unebenheiten aus, können mit der erfindungsgemäßen Ausgestaltung die Momentenungleichförmigkeiten zwar reduziert, jedoch nicht eliminiert werden. Um eine weitere Reduzierung von solchen Momentenungleichförmigkeiten zu erzielen wird vorgeschlagen, dass die Belaglamellen und/oder die Stahllamellen vor einer Montage vermessen werden. Vorteilhaft hierbei ist, dass bei einer gezielten Paarung von Lamellen, welche jeweils toleranzbehaftet sind, sich die Dickenschwankungen bzw. Unebenheiten im Idealfall aufheben können. Es ist hierbei vorgesehen, dass entweder die Lamellen, welche auf der Gegenseite des Anpresselementes angeordnet sind, solange gegeneinander um Ihre Achse verdreht werden, dass sich Toleranzen teilweise aufheben und somit insgesamt eine Schwankung der axialen Dicke aller Lamellen zusammen ergibt, welche in einem tolerierbaren Bereich liegt. Es kann jedoch auch vorgesehen sein, dass das komplette Lamellenpaket, bestehend aus Innenlamellen und Außenlamellen, solange gegeneinander verdreht wird, bis eine Gesamtdicke des Lamellenpakets in einem Toleranzbereich liegt.

Die Erfindung ist weiterhin in zwei Ausführungsbeispielen dargestellt. Es zeigen:
- Fig. 1: eine Lamellenkupplungseinrichtung in Doppelkupplungsbauart, wobei die belaglosen Lamellen sowie die Betätigungskolben primärseitig angeordnet sind,
- Fig. 2: eine Lamellenkupplungseinrichtung in Doppelkupplungsbauart, wobei die Belag aufweisenden Lamellen und die Betätigungskolben primärseitig angeordnet sind.

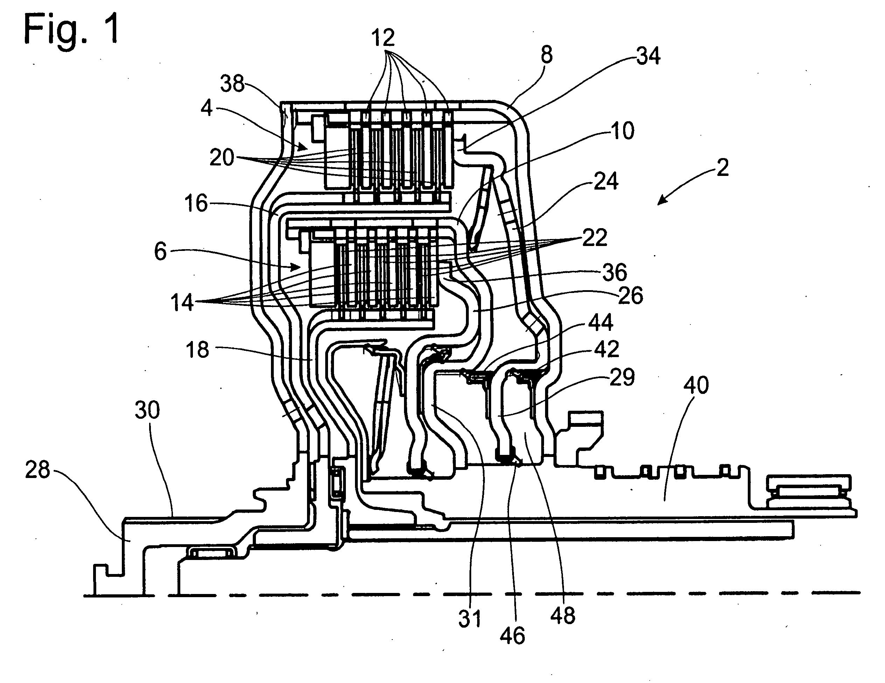

Fig. 1 zeigt eine Lamellenkupplungseinrichtung 2, welche zwei radial angeordnete Kupplungseinrichtungen aufweist. Die radial äußere Kupplungseinrichtung umfasst das Lamellenpaket 4, die radial innere Kupplungsanordnung umfasst das Lamellenpaket 6. Die Lamellenkupplungseinrichtung 2 wird über eine nicht dargestellte Antriebseinheit oder einen Torsionsschwingungsdämpfer angetrieben, welcher über die Eingangsnabe 28 über eine Verzahnung 30 mit der Lamellenkupplungseinrichtung 2 gekoppelt ist. Die Eingangsnabe 28 stellt zusammen mit dem Mitnehmer 38 sowie dem Außenlamellenträger 8, der Ölzuführnabe 40 und dem Außenlamellenträger 10 der inneren Kupplungseinrichtung die Primärseite der Kupplungseinrichtung dar. Weiterhin sind die Anpresselemente 24 und 26, welche als hydraulische Kolben ausgebildet sind, der Primärseite zugeordnet. Der Außenlamellenträger 8 sowie der Außenlamellenträger 10 sind hierbei mit der Ölzuführnabe 40 verschweißt. Der Mitnehmer 38 ist ebenfalls drehfest mit dem Außenlamellenträger 8 mittels Verschweißen drehverkoppelt. Dem Außenlamellenträger 8 sind die Außenlamellen 12 zugeordnet, welche hier als Stahllamellen ausgeführt sind. Die Stahllamellen 12 sind hierbei drehfest, aber axial verschieblich, im Außenlamellenträger 8 mittels einer Außenverzahnung angeordnet. Das Lamellenpaket 4 weist weiterhin Innenlamellen 20 auf, welche drehfest und verschiebbar mit dem Innenlamellenträger 16 verbunden sind und abwechselnd mit den Außenlamellen 12 im Lamellenpaket 4 angeordnet sind. Der Innenlamellenträger 16 ist hierbei sekundärseitig angeordnet und über eine Verzahnung mit der radial inneren Getriebeeingangswelle verbunden. Die Innenlamellen 20 sind als Belag tragende Lamellen ausgebildet und sekundärseitig angeordnet. Zur Drehmomentübertragung von der Antriebseinheit auf die Getriebeeingangswelle wird der primärseitige Kolben 24 über die Ölzuführnabe 40 hydraulisch betätigt, so dass er das Lamellenpaket 4 zur Drehmomentübertragung zusammenpresst. Im gezeigten Ausführungsbeispiel der Fig. 1 sei angenommen, dass die Außenlamellen 12, also die Stahllamellen, gegenüber den Belaglamellen 20 die größeren axialen Toleranzen aufweisen bzw. die größeren Unebenheiten aufweisen. Bei einem Anfahrvorgang rotieren die Außenlamellen zusammen mit dem Anpresselement 24 im Wesentlichen mit Drehzahl der Antriebseinheit, wohingegen der Innenlamellenträger 16 zusammen mit den Innenlamellen 20 steht, solange das Fahrzeug nicht anrollt. Durch die Drehzahldifferenz gleiten die Beläge der Belaglamellen 20 jeweils an den Stahllamellen 12. Der Kolben 24, welcher axial verschieblich ausgebildet ist, wird über die Dichtungselemente 42, 44, 46 axial und radial geführt. Die Dichtungselemente 42 und 46 dichten hierbei den Kolbenraum 48 ab. Der radial innere Bereich 29 des Anpresselementes 24 stellt hierbei eine Wandung des Kolbenraumes dar. Im radial äußeren Bereich 34 wirkt das Anpresselement 24 auf das Lamellenpaket, indem der Hydraulikdruck des Kolbenraumes durch den Kolben auf das Lamellenpaket wirkt. Der Kolben liegt hierbei an der ersten Außenlamelle an. Durch Herstellungstoleranzen bzw. bedingt durch den großen radialen Abstand des Bereichs 34 vom Bereich 31, in welchem der Kolben geführt ist, kann es beim Betätigen des Anpresselementes zum Verkippen bezogen auf die Drehachse desselben kommen. Dadurch liegt der radial äußere Bereich 34 nicht mehr gleichmäßig am Umfang des Lamellenpaketes an, sondern liegt örtlich, bedingt durch das Verkippen zuerst nur an einer Stelle des Lamellenpaketes an beziehungsweise liegt in einem Umfangsbereich fester an, und drückt hier stärker auf das Lamellenpaket.

Die Innenlamellen, welche relativ zum Anpresselement 24 rotieren, durchlaufen nun einmal am Umfang diejenige Stelle, an welcher das Anpresselement 24 mit größerem Druck auf das Lamellenpaket 4 wirkt. Axiale Unebenheiten bzw. partielle axiale Verdickungen der Innenlamellen bewirken nun beim Passieren der mit größerem Druck beaufschlagten Stelle, bzw. Bereich eine Erhöhung des übertragenen Drehmomentes der Lamellenkupplung. Hierdurch wird immer dann, wenn eine Verdickung die Stelle mit der größten Druckbeaufschlagung passiert, mehr Drehmoment auf die Getriebeeingangswelle übertragen, welche sich beim Anfahren mit einem Anfahrzittern bemerkbar macht.

Axiale Verdickungen bzw. die axialen Toleranzen der Außenlamellen 12 wirken sich durch ein Verkippen des Anpresselementes 24 hingegen nicht in Drehmomentungleichförmigkeiten bzw. dem besagten Anfahrzittern aus. Da sowohl das Anpresselement 24 und die Außenlamellen 12 beide gleichseitig, also hier primärseitig, angeordnet sind, passieren die Verdickungen nicht die durch das Verkippen des Anpresselementes erzeugte Engstelle des Lamellenpaketes sondern sind bezüglich des Anpresselementes stationär. Im Ausführungsbeispiel der Fig. 1 weisen erfindungsgemäß die Belaglamellen 20 bzw. 22 gegenüber den Stahllamellen 12 bzw. 14 die geringeren Unebenheiten auf und sind deshalb sekundärseitig angeordnet, wohingegen die Anpresselemente 24 und 26 primärseitig angeordnet sind. Die Stahllamellen 12 bzw. 14 sind gleichseitig den Anpresselementen 24 und 26, also primärseitig angeordnet, wodurch sich axiale Unebenheiten nicht relativ zum Anpresselement bewegen, und somit keine Drehmomentüberhöhung durch ein Verkippen des Anpresselementes bewirken können.

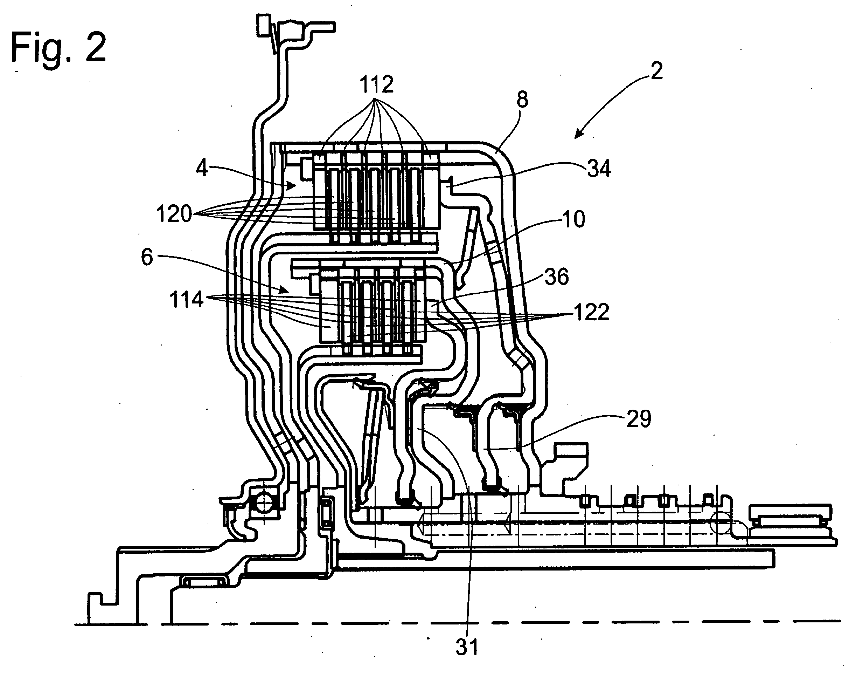

Die Fig. 2 zeigt eine Lamellenkupplungseinrichtung, welche im Wesentlichen baugleich vom Aufbau her mit der Lamellenkupplungseinrichtung der Fig. 1 ist. Die Betätigung der beiden Lamellenkupplungsanordnungen ist hierbei identisch und die beiden Anpresselemente 24 und 26 sind primärseitig angeordnet. In Fig. 2 sei angenommen, dass die Belaglamellen gegenüber den Stahllamellen die größeren axialen Toleranzen bzw. größere axiale Unebenheiten aufweisen. Um eine Momentenungleichförmigkeit beim Anfahren infolge eines Verkippens der Anpresselemente 24 und 26 zu reduzieren bzw. zu eliminieren, sind deshalb die Belaglamellen als Außenlamellen 112 bzw. 114 ausgebildet, den primärseitigen Außenlamellenträgern 8 und 10 zugeordnet. Hierdurch sind die Belaglamellen ebenfalls primärseitig und somit gleichseitig den Anpresselementen angeordnet. Die Stahllamellen sind in Fig. 2 jeweils als Innenlamellen 120, 122 ausgebildet und sekundärseitig angeordnet.
Um die Drehmomentübertragungscharakteristik der Lamellenkupplung noch stabiler bezüglich Anfahrzittern auszugestalten können die Lamellenpakete vor dem Montieren in die Kupplung vermessen werden und eine Abweichung der axialen Gesamterstreckung ermittelt werden.
Wird eine Grenztoleranz der Schwankung der axialen Dicke des Lamellenpaketes über den Umfang überschritten, werden die einzelnen Lamellen, bevorzugt entweder die Innen- oder die Außenlamellen, so gegeneinander verdreht, bis eine Grenztoleranz unterschritten wird. Vorhandene Dickenschwankungen der einzelnen Lamellen können so eingestellt werden, dass sie sich gegenseitig aufheben, bzw. nicht zusätzlich negativ verstärken. Das so eingestellte Paket wird anschließend in dieser Stellung montiert.

In den gezeigten Ausführungsbeispielen der Figuren 1 und 2 können vorteilhaft jeweils nur die sekundärseitigen Lamellen, also die Innenlamellen 20, 22, 120, 122 auf diese Art vermessen und eingestellt werden, da nur sie relativ zum Kolben rotieren.

Dies bewirkt bezüglich des Verkippens des Anpresselementes den größten Nutzen. Aber auch eine Einstellung der primärseitigen Lamellen wirkt sich vorteilhaft aus, da das Lamellenpaket dadurch gleichmäßiger ausgebildet ist und sich vorhandene Dickenschwankungen der einzelnen Lamellen (Außen- oder Innenlamellen) aufheben.

### Bezugszeichenliste:

- 2.: Lamellen-Kupplungseinrichtung
- 4.: Lamellenpaket
- 6.: Lamellenpaket
- 8.: Außenlamellenträger
- 10.: Außenlamellenträger
- 12.: Außenlamellen
- 14.: Außenlamellen
- 16.: Innenlamellenträger
- 18.: Innenlamellenträger
- 20.: Innenlamellen
- 22.: Innenlamellen
- 24.: Anpresselement
- 26.: Anpresselement
- 29.: radial innerer Bereich
- 30.: Verzahnung
- 31.: radial innerer Bereich
- 34.: radial äußerer Bereich
- 36.: radial äußerer Bereich
- 38.: Mitnehmer
- 40.: Ölzuführnabe
- 42.: Dichtungselement
- 44.: Dichtungselement
- 46.: Dichtungselement
- 48.: Kolbenraum
- 112.: Außenlamellen
- 114.: Außenlamellen
- 120.: Innenlamellen
- 122.: Innenlamellen

## Patentansprüche

1. Verfahren zur Montage einer Lamellen-Kupplungseinrichtung (2) für die Anordnung in einem Antriebsstrang eines Kraftfahrzeugs zwischen einer Antriebseinheit und einem Getriebe, wobei die Kupplungseinrichtung (2) mit einem Lamellenpaket (4 bzw. 6) ausgeführt ist, welches einem Außenlamellenträger (8 bzw. 10) zugeordnete Außenlamellen (12, 112 bzw. 14, 114) und mit diesen in gegenseitigen Mitnahmeeingriff bringbare, einem Innenlamellenträger (16 bzw. 18) zugeordnete Innenlamellen (20, 120 bzw. 22, 122) aufweist, wobei einer der Lamellenträger (8 bzw.10) primärseitig und der andere Lamellenträger (16 bzw. 18) sekundärseitig angeordnet ist und wobei das Lamellenpaket (4 bzw. 6) Belag aufweisende und belaglose Lamellen aufweist, die entweder als Außenlamellen (12, 112 bzw. 14, 114) oder als Innenlamellen (20, 120 bzw. 22, 122) ausgeführt sind, und wobei das Lamellenpaket (4 bzw. 6) mittels eines Anpresselementes (24 bzw. 26) welches entweder primärseitig oder sekundärseitig angeordnet ist, zur Drehmomentübertragung zusammengedrückt wird, wobei die Belag aufweisenden und die belaglosen Lamellen unterschiedlich große Unebenheiten, insbesondere Dickenschwankungen am Umfang, oder axiale Toleranzen aufweisen und wobei das Anpresselement (24 bzw. 26)
und die Lamellen, welche die größeren Unebenheiten oder axialen Toleranzen aufweisen, gleichseitig angeordnet sind,
**dadurch gekennzeichnet,**
**dass** das Verfahren ein Vermessen der Lamellenpakete vor dem Montieren umfaßt um eine Abweichung der axialen Gesamterstreckung zu erfassen und dass bei Überschreitung einer Grenztoleranz der Schwankung der axialen Dicke des Lamellenpakets, einzelne Lamellen so gegeneinander verdreht werden, bis die Grenztoleranz unterschritten wird.

2. Verfahren nach Anspruch 1,
**dadurch gekennzeichnet,**
**dass** die belaglosen Lamellen, als Stahllamellen ausgebildet sind und die Belag aufweisenden Lamellen mit Belagtragelementen und auf einer Seite oder - vorzugsweise - auf beiden Seiten daran angebrachten Belägen ausgeführt sind.

3. Verfahren nach Anspruch 2,
**dadurch gekennzeichnet,**
**dass** die Stahllamellen als Außenlamellen (12, 14) ausgeführt sind und gegenüber den Belaglamellen (20, 22) die größeren axialen Toleranzen aufweisen und primärseitig angeordnet sind.

4. Verfahren nach Anspruch 2,
**dadurch gekennzeichnet,**
**dass** die Belaglamellen als Außenlamellen (112, 114) ausgeführt sind und gegenüber den Stahllamellen (120, 122) die größeren axialen Toleranzen aufweisen und primärseitig angeordnet sind.

5. Verfahren nach Anspruch 1,
**dadurch gekennzeichnet,**
**dass** das Anpresselement (24, 26) als hydraulisch betätigter Kolben ausgebildet ist, welcher in einem radial inneren Bereich einen, einem Kolbenraum zugeordneten Bereich (29, 31) aufweist, und in einem radial äußeren Bereich (34, 36) auf das Lamellenpaket wirkt.

6. Verfahren nach Anspruch 2,
**dadurch gekennzeichnet,**
**dass** die Belaglamellen und/oder die Stahllamellen vor einer Montage vermessen werden.

## Claims

1. Method for mounting a multiple-disc clutch device (2) for arrangement in a drive train of a motor vehicle between a drive unit and a transmission, the clutch device (2) being designed with a disc stack (4 or 6) which has outer discs (12, 112 or 14, 114) assigned to an outer-disc carrier (8 or 10) and inner discs (20, 120 or 22, 122) capable of being brought into mutual driving engagement with these and assigned to an inner-disc carrier (16 or 18), one of the disc carriers (8 or 10) being arranged on the primary side and the other disc carrier (16 or 18) being arranged on the secondary side, and the disc stack (4 or 6) having lining-equipped and lining-free discs which are designed either as outer discs (12, 112 or 14, 114) or as inner discs (20, 120 or 22, 122), and the disc stack (4 or 6) being compressed, for torque transfer, by means of a pressure element (24 or 26) which is arranged either on the primary side or on the secondary side, the lining-equipped and the lining-free discs having unevennesses, in particular thickness fluctuations, of different size on the circumference, or axial tolerances, and the pressure element (24 or 26) and the discs which have the greater unevennesses or axial tolerances being arranged on the same side, **characterized in that** the method comprises a measurement of the disc stacks before mounting, in order to detect a deviation in the overall axial extent, and **in that**, in the event of the overshooting of a limiting tolerance in the fluctuation of the axial thickness of the disc stack, individual discs are rotated with respect to one another until the limiting tolerance is undershot.

2. Method according to Claim 1, **characterized in that** the lining-free discs are designed as steel discs, and the lining-equipped discs are produced with lining-carrying elements and with linings attached thereto on one side or preferably on both sides.

3. Method according to Claim 2, **characterized in that** the steel discs are designed as outer discs (12, 14), have the greater axial tolerances with respect to the lining discs (20, 22) and are arranged on the primary side.

4. Method according to Claim 2, **characterized in that** the lining discs are designed as outer discs (112, 114), have the greater axial tolerances with respect to the steel discs (120, 122) and are arranged on the primary side.

5. Method according to Claim 1, **characterized in that** the pressure element (24, 26) is designed as a hydraulically actuated piston which, in a radially inner region, has a region (29, 31) assigned to a piston space and, in a radially outer region (34, 36), acts upon the disc stack.

6. Method according to Claim 2, **characterized in that** the lining discs and/or the steel discs are measured before mounting.

## Revendications

1. Procédé de montage d'un dispositif d'embrayage à disques (2) destiné à être disposé dans une chaîne de transmission d'un véhicule automobile entre une unité d'entraînement et une boîte de vitesses, le dispositif d'embrayage (2) étant réalisé avec un paquet de disques (4, respectivement 6), qui présente des disques extérieurs (12, 112, respectivement 14, 114) associés à un support de disques extérieurs (8, respectivement 10), et des disques intérieurs (20, 120, respectivement 22, 122) associés à un support de disques intérieurs (16, respectivement 18), pouvant être amenés en prise d'entraînement mutuel avec ceux-ci, l'un des supports de disques (8, respectivement 10) étant disposé du côté primaire et l'autre support de disques (16, respectivement 18) étant disposé du côté secondaire, et le paquet de disques (4, respectivement 6) présentant des disques avec garniture et des disques sans garniture, qui sont réalisés soit sous forme de disques extérieurs (12, 112, respectivement 14, 114) soit sous forme de disques intérieurs (20, 120, respectivement 22, 122), le paquet de disques (4, respectivement 6) étant comprimé en vue du transfert de couple, au moyen d'un élément de pressage (24, respectivement 26), qui est disposé soit du côté primaire soit du côté secondaire, les disques avec garniture et les disques sans garniture présentant des inégalités de tailles différentes, notamment des variations d'épaisseur sur la périphérie, ou des tolérances axiales différentes, et l'élément de pressage (24, respectivement 26) et les disques qui présentent les inégalités ou les tolérances axiales les plus grandes, étant disposés du même côté,
**caractérisé en ce que**
le procédé comprend une mesure des paquets de disques avant le montage afin de détecter un écart de l'étendue axiale totale et **en ce que** dans le cas d'un dépassement d'une tolérance limite de variation de l'épaisseur axiale du paquet de disques, des disques individuels sont tournés les uns par rapport aux autres jusqu'à ce que l'écart soit en dessous de la tolérance limite.

2. Procédé selon la revendication 1,
**caractérisé en ce que**
les disques sans garniture sont réalisés sous forme de disques en acier et les disques avec garniture sont réalisés avec des éléments de support de garniture et des garnitures montées d'un côté, ou de préférence sur les deux côtés de ceux-ci.

3. Procédé selon la revendication 2,
**caractérisé en ce que**
les disques en acier sont réalisés sous forme de disques extérieurs (12, 14) et présentent, par rapport aux disques avec garniture (20, 22), les plus grandes tolérances axiales, et sont disposés du côté primaire.

4. Procédé selon la revendication 2,
**caractérisé en ce que**
les disques avec garniture sont réalisés sous forme de disques extérieurs (112, 114) et présentent, par rapport aux disques en acier (120, 122), les plus grandes tolérances axiales et sont disposés du côté primaire.

5. Procédé selon la revendication 1,
**caractérisé en ce que**
l'élément de pressage (24, 26) est réalisé sous forme de piston à commande hydraulique, qui présente dans une région radialement interne, une région (29, 31) associée à une chambre de piston, et agit dans une région radialement extérieure (34, 36) sur le paquet de disques.

6. Procédé selon la revendication 2,
**caractérisé en ce que**
les disques avec garniture et/ou les disques en acier sont mesurés avant un montage.
